# EUROPÄISCHE PATENTANMELDUNG

(11) **EP 0 654 394 A1**
(43) Veröffentlichungstag der Anmeldung: **24.05.1995**
(21) Anmeldenummer: 94117982.2
(22) Anmeldetag: 15.11.1994
(51) Int. Cl.: B62D 11/18, F16H 3/72

(54) **Lenksystem für Raupenfahrzeuge**

(30) Priorität: 19.11.1993 US 154838
(71) Anmelder: DEERE & COMPANY, Moline, Illinois 61265 (US)
(72) Erfinder: Puetz, Craig Alan, Waterloo, Iowa 50701 (US); Kizlyk, Mervin Peter, Cedar Falls, Iowa 50613 (US); Nagorcka, James Arthur, Tarrington, 3301 Victoria (AU)
(74) Vertreter: Feldmann, Bernhard

(57) **Zusammenfassung**

Es wird ein Lenksystem für Raupenfahrzeuge beschrieben. Eine Antriebsmaschine treibt eine rechte und eine linke Antriebswelle (28, 30) an, die mit einem rechten bzw. linken Planetenträger (32, 34) versehen sind. Die Planetenräder (36) der Planetenträger (28, 30)kämmen mit einem rechten bzw. einem linken Sonnenrad (38, 40), das durch einen rechten bzw. linken Hydraulikmotor (52, 54) antreibbar ist, um die Drehzahl des zugehörigen Sonnenrades (38, 40) unabhängig von einander zu erhöhen oder abzusenken. Mit den Planetenrädern (36) kämmen ferner ein rechtes bzw. ein linkes Ringrad (56, 58), das mit einem rechten bzw. einem linken Antriebsrad (14) verbunden ist. Durch den Antrieb der Hydraulikmotoren (52, 54) läßt sich die Drehzahl der Antriebsräder unabhängig voneinander steuern.

## Beschreibung

Die Erfindung betrifft ein Lenksystem mit Planetengetriebe für Raupenfahrzeuge gemäß dem Oberbegriff des Patentanspruchs 1, durch das sich die Drehzahlen des rechten und des linken Antriebsrades unabhängig voneinander einstellen lassen.

Es sind drei grundlegende Verfahren zum Lenken eines Raupenfahrzeuges bekannt. Hierbei handelt es sich um ein Kupplungs-Brems-System, ein hydrostatisches System und ein Lenksystem mit Planetengetriebesätzen. Bei dem Kupplungs-Brems-System wird das in der Kurve innen liegende Antriebsrad abgebremst oder stillgesetzt, während das äußere Rad weiter dreht. Im hydrostatischen System treiben Hydraulikmotoren die Antriebsräder unabhängig voneinander an. Hierbei kann das in einer Kurve innen liegende Rad abgebremst, still gesetzt oder rückwärts betrieben werden, während die Drehzahl des äußeren Antriebsrad erhöht wird. Dies kann in beliebigen Kombinationen erfolgen. Bei einem üblichen Lenksystem mit Planetengetrieben verringert ein einziger Hydraulikmotor die Drehzahl des innen liegenden Antriebsrades und erhöht die Drehzahl des äußeren Rades, sofern eine Kurve durchfahren werden soll. Dabei greift der einzige Hydraulikmotor in eine linke und in eine rechte Planetenradanordnung, die mit einem linken bzw. rechten Antriebsrad verbunden sind, ein.

Durch die US-A-4,917,200 wurde ein Lenksystem mit Planetengetrieben und jeweils zugeordneten Hydraulikmotoren vorgeschlagen. Dort zeigt die Fig. 4 ein Lenksystem der eingangs genannten Art, bei dem ein Antriebsmotor eine quer ausgerichtete Antriebswelle antreibt, an deren Enden je ein Planetenträger befestigt ist. Jeder Planetenträger trägt Planetenräder mit jeweils zwei Verzahnungen. Die erste Verzahnung kämmt mit einem ersten Sonnenrad, das über eine Ausgangswelle unmittelbar mit dem zugehörigen Antriebsrad verbunden ist. Die zweite Verzahnung kämmt mit einem zweiten Sonnenrad, welches mit einem Stirnrad verbunden ist. Das große Stirnrad läßt sich über ein Zwischenstirnrad von dem Schneckenrad eines Lenkmotors antreiben, um die Ausgangsdrehzahl der Ausgangswelle zu beeinflussen und das Lenken zu ermöglichen. Ferner wird in Fig. 3 der US-A-4,917,200 ein ähnlich wirkendes - Lenksystem gezeigt, bei dem die quer ausgerichtete Antriebswelle beiderseits Ringräder trägt. Jedes Ringrad kämmt mit auf einem Planetenträger gelagerten Planetenrädern. Der Planetenträger ist unmittelbar mit dem zugehörigen Antriebsrad verbunden, während die Planetenräder mit einem Sonnenrad kämmen, welches mit einem von einem Lenkmotor angetriebenen großen Stirnrad verbunden ist.

Aus der US-A-5,139,465 geht ein hydromechanisches Übertragungssystem hervor, bei dem bei niedrigen Fahrgeschwindigkeiten ein zweipfadiges hydrostatisches Getriebe zum Zuge kommt. Bei hohen Geschwindigkeiten läuft der Antrieb über ein zweipfadiges hydromechanisches Getriebe. Bei hohen Geschwindigkeiten werden zum Lenken die Geschwindigkeiten der Hydromotoren modifiziert.

Die der Erfindung zugrunde liegende Aufgabe wird darin gesehen, ein verbessertes Lenksystem anzugeben, das sich insbesondere raumsparend ausbilden läßt.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Bei dem erfindungsgemäßen Lenksystem wird eine rechte und eine linke Antriebswelle durch einen Antriebsmotor angetrieben. Die äußeren Enden der Antriebswellen tragen je einen Planetenträger, auf dem Planetenräder drehbar angeordnet sind. Mit den Planetenrädern steht jeweils ein Sonnenrad in Verbindung, das ein mit einer Außenverzahnung versehenen sich radial erstreckenden Ring trägt. Diese Außenverzahnung steht über ein als Stirnrad ausgebildetes Zwischenrad mit einem Lenkmotor in Verbindung. Die Sonnenräder treiben ferner ein zugehöriges Ringrad an, welches mit der Endantriebswelle verbunden ist.

Bei normaler Geradeaus-Vorwärts- und -Rückwärtsfahrt drehen die Lenkmotoren nicht, sondern bremsen das jeweilige Sonnenrad ab. Bei Kurvenfahrt werden die Lenkmotoren wahlweise betätigt, um das Fahrzeug zu lenken. Beispielsweise besteht eine Strategie zum Durchfahren einer Linkskurve darin, den linken Lenkmotor zu verwenden, um das linke Antriebsrad zu verlangsamen, und die Drehzahl des rechten Antriebsrades beizubehalten, indem der rechte Lenkmotor in Ruhe bleibt und weiterhin das Sonnenrad abbremst. Es sind auch andere Strategien möglich, bei denen beispielsweise die Drehzahl des rechten Rades erhöht wird, oder bei denen durch die Lenkmotoren die Drehzahl eines Antriebsrades gesteigert und die des anderen Antriebsrades abgesenkt wird.

Es wird betont, daß bei sehr langsamen Geschwindigkeiten das Fahrzeug allein durch die hydraulischen Lenkmotoren angetrieben werden kann.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die rechte Seitenansicht eines Raupenfahrzeuges,
- Fig. 2: die schematische Darstellung eines erfindungsgemäßen Lenksystems und
- Fig. 3: die Querschnittsdarstellung eines Teils des erfindungsgemäßen Lenksystems.

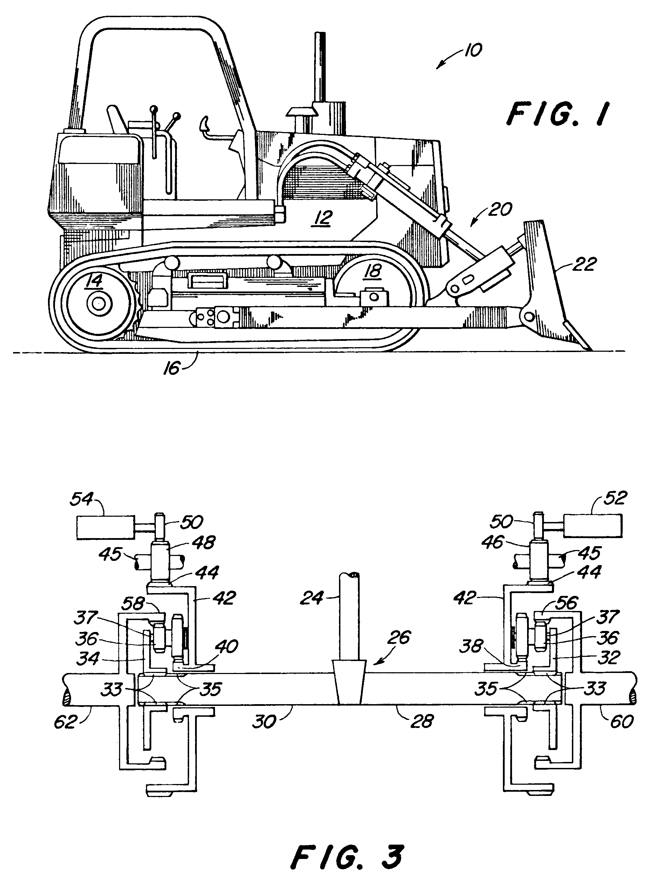

Das in Fig. 1 dargestellte Raupenfahrzeug 10 mit laufbahnhemmender Lenkung, enthält eine Tragstruktur 12, welche eine Verbrennungskraftmaschine und ein Getriebe zum Antrieb der Antriebsräder 14 beherbergt. Eine Gleiskette 16 steht mit dem Antriebsrad 14 und einem Leitrad 16 in Eingriff. Ferner stehen nicht dargestellte Laufrollen, die zwischen dem Antriebsrad 14 und der Leitrolle 16 angeordnet sind, mit der Gleiskette 16 in Eingriff. Das Raupenfahrzeug 10 ist mit geeigneten Gestängen und Hydraulikzylindern 20 versehen, um ein Planierschild 22 zu betätigen.

Das Getriebe enthält eine Hauptantriebswelle 24, die sich axial von dem Getriebe bis zu einem rechtwinkligen Kegelradgetriebe 26 erstreckt. Das rechtwinklige Kegelradgetriebe 26 richtet die Drehbewegung der Hauptantriebswelle 24 auf eine rechte und eine linke Antriebswelle 28 und 30. Die rechte und die linke Antriebswelle 28, 30 sind über Keilverzahnungen 29 und 31 mit dem rechtwinkligen Kegelradgetriebe 26 verbunden. Hierdurch sind die Antriebswellen 28, 30 gegeneinander blockiert, so daß sie mit der selben Drehzahl angetrieben werden und wie eine einzige Achse wirken.

An den äußeren Enden der rechten und der linken Antriebswelle 28 und 30 sind ein rechter und ein linker Planetenträger 32 und 34 angeordnet. Die Planetenträger 32, 34 enthalten Innenverzahnungen 33, die mit Außenverzahnungen 35 der zugehörigen Antriebswelle 28 und 30 in Eingriff stehen. Jeder der beiden Planetenträger 32, 34 trägt drei Planetenräder 36, die drehbar auf Stummelachsen 37 gelagert sind. Die Planetenräder 36 laufen auf rechten bzw. linken Sonnenrädern 38, 40 ab. Die Sonnenräder 38, 40 enthalten je einen sich radial erstreckenden Radkranz 42 mit umlaufender Verzahnung 44. Die Verzahnungen 44 der Radkränze 42 der Sonnenräder 38, 40 greifen in ein rechtes bzw. ein linkes Stirnrad 46, 48 ein. Das rechte und linke Stirnrad 46, 48 sind jeweils auf einer Achse 45 drehbar gelagert und werden je durch ein Antriebsritzel 50 eines rechten bzw. linken Hydraulikmotors 52, 54 angetrieben.

Mit den Planetenrädern 36 stehen auch ein rechtes bzw. ein linkes Ringrad 56 und 58 in Eingriff. Das rechte bzw. das linke Ringrad 56, 58 sind über rechte und linke Endantriebswellen 60, 62 mit dem rechten bzw. dem linken Antriebsrad 14 verbunden. Bei gerader Fahrt nach vorn oder zurück drehen die Hochdruckhydraulikmotoren 52, 54 nicht, so daß durch sie die Sonnenräder 38, 40 abgebremst bzw. blockiert werden. Damit wird die Leistung von der rechten bzw. der linken Antriebswelle 28, 30 durch den rechten bzw. linken Planetenträger 32, 34 auf die Planetenräder 36 und dann auf die rechten bzw. linken Ringräder 56 und 58 übertragen.

Der rechte und der linke Hydraulikmotor 52, 54 können im Uhrzeigerdrehsinn oder entgegen dem Uhrzeigerdrehsinn angetrieben werden. Daher können die Hydraulikmotoren 52, 54 die Drehzahl des rechten und/oder linken Ringrades 56, 58 erhöhen bzw. absenken. Beispielsweise kann der Hydraulikmotor zum Durchfahren einer Rechtskurve im Uhrzeigerdrehsinn angetrieben werden, wodurch die Drehzahl der Planetenräder 36 und damit auch die Drehzahl des rechten Ringrades 56 abgesenkt werden. Dies verursacht eine Verlangsamung des rechten Antriebsrades 14. Wird dabei die Drehzahl des linken Antriebsrades beibehalten, so macht das Raupenfahrzeug eine Rechtskurve.

Sofern unabhängige Ansteuerungen für die beiden Hydraulikmotoren 52, 54 vorhanden sind, können unterschiedliche Wendestrategien ausgeführt werden. Beispielsweise kann die Geschwindigkeit des rechten Antriebsrades um Zwei Meilen pro Stunde abgesenkt werden, während die Geschwindigkeit des rechten Antriebsrades um eine Meile pro Stunde erhöht wird. Es kann auch zum Durchfahren einer Kurve an Stelle einer Verlangsamung des rechten Antriebsrades die Geschwindigkeit des linken Antriebsrades erhöht werden. Bei langsamen Geschwindigkeiten können sich die Antriebsräder in entgegengesetzter Richtung drehen.

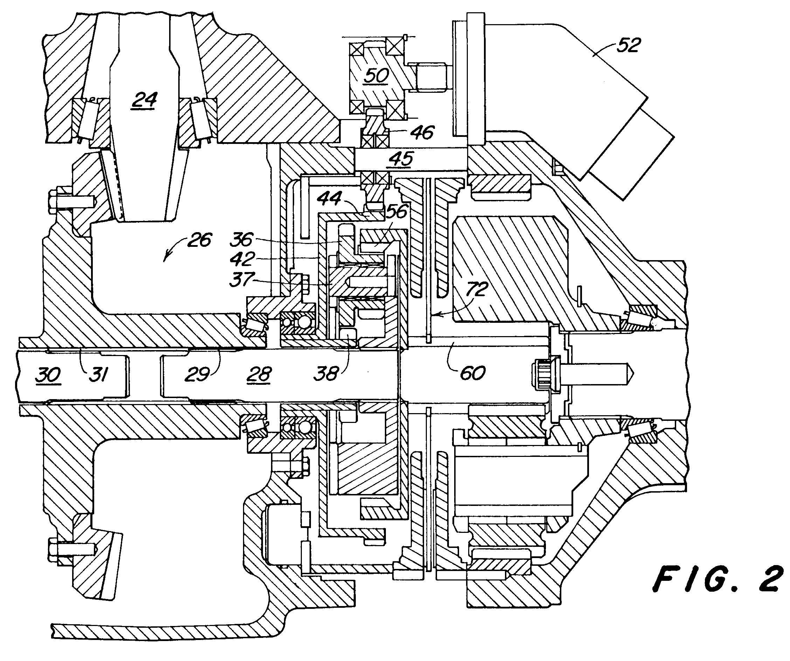

Wie aus Fig. 2 hervorgeht, läßt sich das Lenksystem in einer kompakten Bauweise ausbilden, die genügend Bauraum für eine Betriebsbremse 72 bereitstellt. Die Hydraulikmotoren 52, 54 lassen sich in kompakten hydrostatischen Pumpen-Motor-Bausätzen integrieren.

## Patentansprüche

1. Lenksystem für Raupenfahrzeuge mit
- einer Hauptantriebswelle (24),
- einer rechten und einer linken durch die Hauptantriebswelle (24) angetriebenen Antriebswelle (28, 30), die mit einem rechten bzw. linken Planetenträger (32, 34) versehen sind, welche ihrerseits Planetenräder (36) tragen,
- Mitteln (26) zur Verriegelung der rechten und der linken Antriebswelle (28, 30) miteinander,
- einem rechten und einem linken Sonnenrad (38, 40), welche mit den Planetenrädern (36) des rechten bzw. linken Planetenträgers (32, 34) in Eingriff stehen,
- einem rechten und einem linken Lenkmotor (52, 54), durch den das rechte bzw. linke Sonnenrad (38, 40) antreibbar ist, wobei der rechte bzw. linke Lenkmotor (52, 54) die Drehzahl des zugehörigen Sonnenrades (38, 40) unabhängig von einander erhöht oder absenkt,
gekennzeichnet durch
ein rechtes und ein linkes Ringrad (56, 58), das mit den Planetenrädern (36) des rechten bzw. linken Planetenträgers (32, 34) in Eingriff steht und mit einem rechten bzw. einem linken Antriebsrad (14) verbunden ist.

2. Lenksystem nach Anspruch 1, dadurch gekennzeichnet, daß der rechte und der linke Lenkmotor (52, 54) jeweils ein Hydraulikmotor mit jeweils einem Antriebsritzel (50) zum Antrieb-des rechten bzw. linken Sonnenrades (38, 40) aufweist.

3. Lenksystem nach Anspruch 1 oder 2, dadurch gekennzeichnet, daß das rechte und das linke Sonnenrad (38, 40) jeweils mit einem sich radial erstreckenden außen verzahnten Ring (42) versehen sind, welcher durch den rechten bzw. linken Hydraulikmotor (52, 54) antreibbar ist.

4. Lenksystem nach Anspruch 3, dadurch gekennzeichnet, daß ein rechtes und ein linkes Stirnrad (46, 48) zwischen dem sich radial erstreckenden Ring (42) und dem Antriebsritzels (50) des zugehörigen Hydraulikmotors (52, 54) angeordnet ist.

5. Lenksystem nach einem der Ansprüche 1 bis 4, dadurch gekennzeichnet, daß die Planetenräder (36) jeweils zwei Zahnkränze aufweisen, von denen ein Zahnkranz mit einem Sonnenrad (38, 40) und der andere Zahnkranz mit einem Ringrad (56, 58) kämmt.
